# EUROPEAN PATENT APPLICATION

(11) **EP 2 244 497 A1**
(43) Date of publication of application: **27.10.2010**
(21) Application number: 09731557.6
(22) Date of filing: 04.03.2009
(51) Int. Cl.: H04W 12/06, H04L 9/32

(54) **RADIO COMMUNICATION SYSTEM AND AUTHENTICATION PROCESSING UNIT SELECTING METHOD**

(30) Priority: 18.04.2008 JP 2008109047
(71) Applicant: NEC Corporation, Minato-ku Tokyo 108-8001 (JP)
(72) Inventor: TAKANO, Yusuke, Tokyo 108-8001 (JP)
(74) Representative: Betten & Resch
(86) International application number: PCT/JP2009/054050
(87) International publication number: WO 2009/128298

(57) **Abstract**

The present invention applies to a radio communication system that has a subscriber authentication server provided with a plurality of authentication processors and first and second authentication verification apparatuses that carry out each of authentication requests for first and second authentications to the subscriber authentication server for the same subscriber. In this radio communication system, the subscriber authentication server, upon success of the first authentication, reports to the first authentication verification apparatus identification information of the authentication processor that carried out the first authentication, and the first authentication verification apparatus reports to the second authentication verification apparatus the identification information that was reported from the subscriber authentication server.

## Description

### Technical Field

The present invention relates to a technique of selecting the optimum authentication processor in a radio communication system in which a plurality of authentication processors are provided in a subscriber authentication server.

### Background Art

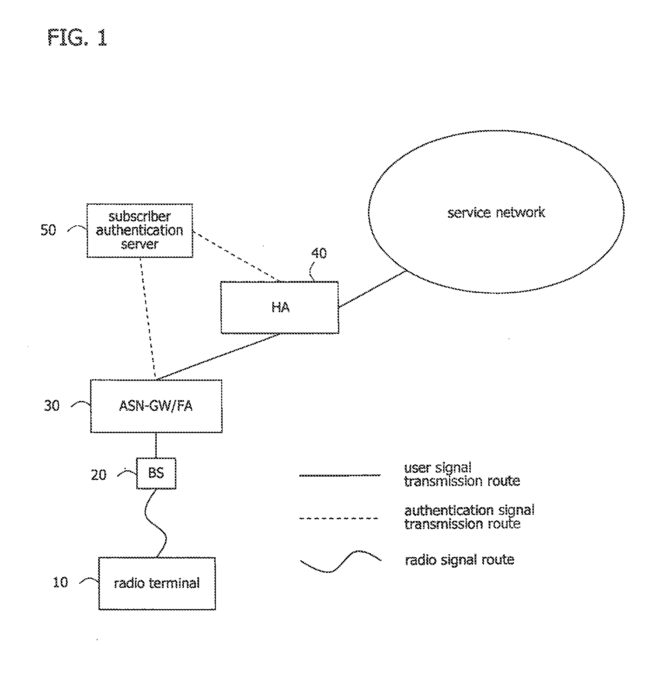

A radio communication system of the network configuration such as shown in FIG. 1 was proposed in WiMAX (Worldwide Interoperability for Microwave Access) Forum NWG (Network Working Group) Stage 2.

The radio communication system shown in FIG. 1 includes: radio terminal 10, base station (BS) 20, ASN-GW (Access Service Network-Gatowky)/FA (Foreign Agent) 30, HA (Home Agent) 40, and subscriber authentication server 50.

Radio terminal 10 is provided with the capabilities of an MN (Mobile Node) in IP protocol and a radio capability.

Base station 20 is an apparatus that terminates radio signals.

ASN-GW/FA 30 is a gateway apparatus provided with a radio resource management capability and an outside agent capability in a Mobile IP.

HA 40 is a gateway apparatus that executes mobility control on the IP layer (tunnel switching between FA-HA) and connects radio terminal 10 to a service network.

Subscriber authentication server 50 is a management-capable apparatus that authenticates the subscriber of radio terminal 10 when a service is used.

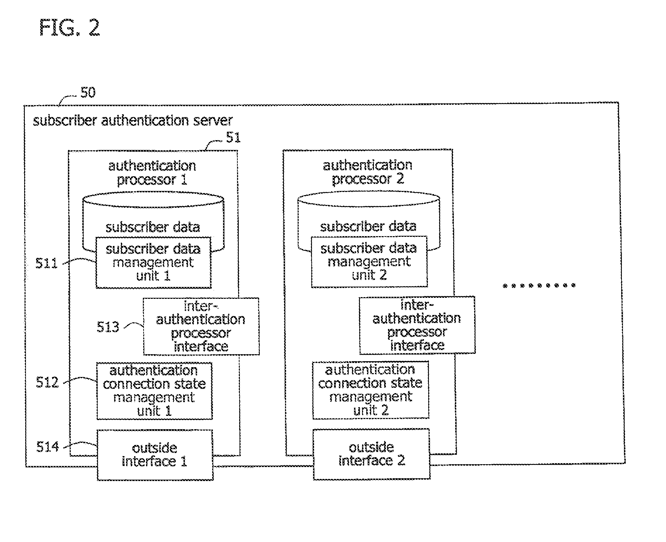

However, among subscriber authentication servers 50 are those that include a plurality of authentication processors, as shown in FIG. 2. A subscriber authentication server that includes a plurality of authentication processors is disclosed in, for example, Patent Document 1.

Subscriber authentication server 50 shown in FIG. 2 includes a plurality of authentication processors 51.

Each authentication processor 51 includes: subscriber data management unit 511, authentication connection state management unit 512, inter-authentication processor interface 513, and outside interface 514.

The IP address of outside interface 514 of each authentication processor 51 can be specified by executing a DNS search in which an authentication verification apparatus (ASN-GW/FA 30 and HA 40) submits inquiries to the DNS (Domain Name System) server for the Realm portion of an NAI (Network Access Identifier). As a result, each authentication processor 51 can be selected from the outside.

Subscriber data management unit 511 manages subscriber data. Subscriber data can be accessed from another authentication processor 51 by way of inter-authentication processor interface 513.

Authentication connection state management unit 512 manages subscriber connection management information (temporary common keys or temporary information required for connection) that indicates the connection state of subscribers for which authentication requests are received by way of outside interface 514.

A configuration is thus adopted in subscriber authentication server 50 that enables a plurality of authentication processors 51 to handle shared subscriber data to realize an authentication process that is redundant and dispersed.

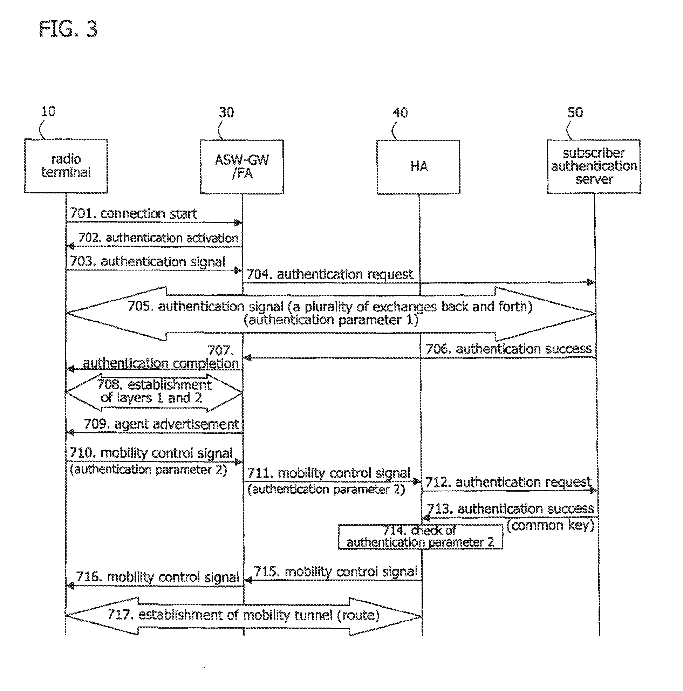

The operations when carrying out a connection process to the service network proposed in WiMAX Forum NWG Stage 2 when subscriber authentication server 50 shown in FIG. 2 is applied in the radio communication system shown in FIG. 1 are next described with reference to FIG. 3.

As shown in FIG. 3, radio terminal 10 notifies the start of connection to the service network in Step 701.

ASN-GW/FA 30 next reports the activation of the authentication procedure to radio terminal 10 in Step 702.

Radio terminal 10 next reports an authentication signal to ASN-GW/FA 30 in accordance with the activation of the authentication procedure in Step 703.

ASN-GW/FA 30 then reports an authentication request to subscriber authentication server 50 in Step 704 (the authentication here requested is called a network connection authentication). At this time, ASN-GW/FA 30 specifies the IP address based on the Realm portion of the NAI in the authentication signal and selects authentication processor 51 that has outside interface 514 that was specified by the IP address to report the authentication request.

Subscriber authentication server 50 next carries out authentication of the subscriber of radio terminal 10 by an exchange of authentication parameter 1 with radio terminal 10 in Step 705.

Upon successful authentication, subscriber authentication server 50 next reports the authentication success to ASN-GW/FA 30 in Step 706. At this time, subscriber authentication server 50 uses authentication parameter 1 to generate a temporary common key for generating authentication parameter 2 that is used in subsequent mobility authentication with radio terminal 10.

Upon receiving the notification of authentication success, ASN-GW/FA 30 next reports authentication completion to radio terminal 10 in Step 707 and establishes the subordinate layers radio (layer 1) and link (layer 2) in Step 708. ASN-GW/FA 30 further, after establishing the subordinate layers, reports an FA agent advertisement to radio terminal 10 and begins a mobility tunnel establishment procedure in Step 709.

Radio terminal 10 next reports a mobility control signal that contains authentication parameter 2 to ASN-GW/FA 30 in Step 710, and ASN-GW/FA 30 transfers the mobility control signal to HA 40 in Step 711.

In Step 712, HA 40 then submits an inquiry to subscriber authentication server 50 for the temporary common key of the relevant subscriber to report the authentication request (the authentication here requested is called mobility authentication). At this time, similar to ASN-GW/FA 30, HA 40 also selects authentication processor 51 based on the Realm portion of the NAI to report the authentication request.

Upon successful authentication, subscriber authentication server 50 next reports the temporary common key to HA 40 in Step 713, and HA 40 uses the temporary common key to check authentication parameter 2 in Step 714.

HA 40 next, upon success of checking, reports the mobility control signal to radio terminal 10 by way of ASN-GW/FA 30 in Steps 715 and 716.

A mobility tunnel is thus established between radio terminal 10 and HA 40 in Step 717.

However, in FIG. 3, authentication, processor 51 in subscriber authentication server 50 is selected by different authentication verification apparatuses (ASN-GW/FA 30 and HA 40) in Steps 704 and 712 even for authentication of the same subscriber.

Because ASN-GW/FA 30 and HA 40 use only the Realm portion to select authentication processor 51 at this time, the possibility exists that different authentication processors 51 will be selected.

For example, it will be assumed that ASN-GW/FA 30 and HA 40 select different authentication processor (ASN) and authentication processor (HA), respectively.

In this case, the subscriber connection management information of the subscriber that is necessary in the two authentication processes (network connection authentication and mobility authentication) is managed by authentication processor (ASN) that carried out the first network connection authentication.

As a result, authentication processor (HA), upon receiving the subscriber authentication request from HA 40, must submit an inquiry about the subscriber connection state to the authentication processor (ASN) that manages the subscriber connection management information of the subscriber by way of mter-authentication processor interface 513.

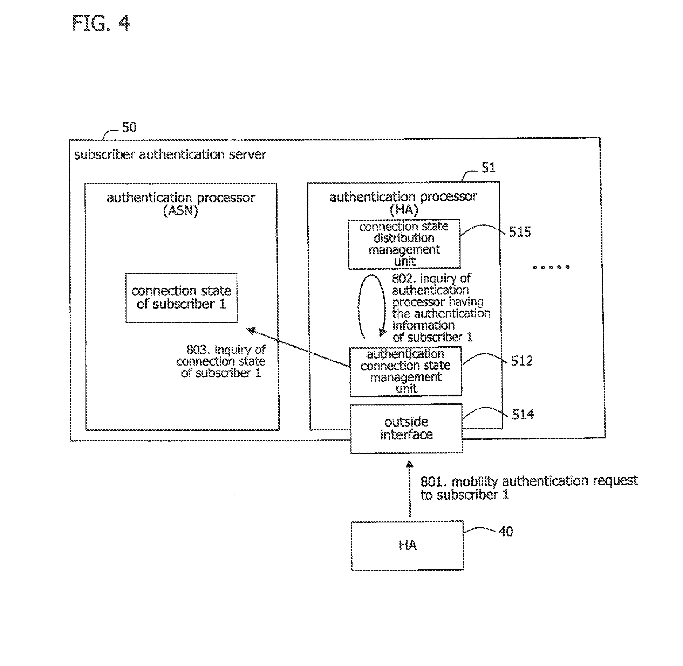

For the purpose of such inquiries between authentication processors, connection state distribution management unit 515 must be provided as shown in FIG. 4 for managing the connection state distribution of subscribers for which authentication requests are received, i.e., for managing the authentication processor that holds a subscriber's subscriber connection management information.

In other words, as shown in FIG. 4, authentication connection state management unit 512 of authentication processor (HA), upon receiving a mobility authentication request of subscriber 1 from HA 40 in Step 801, first submits an inquiry to connection state distribution management unit 515 for the authentication processor that holds the subscriber connection management information of subscriber 1 in Step 802. Authentication connection state management unit 512 then submits an inquiry to the authentication processor (ASN) about the connection state of subscriber 1 by way of inter-authentication processor interface 513 in Step 803.

The problem therefore arises that the selection of different authentication processors in the two authentication processes for the same subscriber entails needless inquiries and management, resulting in an increase of the processing time of the authentication process and a need for otherwise unnecessary resources.
Patent Document 1: JP-A-2005-203966

### Disclosure of the Invention

It is therefore an object of the present invention to provide a radio communication system and authentication processor selection method that enable the selection of the same authentication processor in the authentication process for the same subscriber and that thus solve the above-described problems.

The radio communication system of the present invention is a radio communication system having a subscriber authentication server provided with a plurality of authentication processors and first and second authentication verification apparatuses that carry out authentication requests for first and second authentications, respectively, for the same subscriber to the subscriber authentication server, wherein:
the subscriber authentication server, upon a successful first authentication, reports identification information of the authentication processor that carried out the first authentication to the first authentication verification apparatus; and
the first authentication verification apparatus reports the identification information that was reported from the subscriber authentication server to the second authentication verification apparatus.

The authentication processor selection method of the present invention is an authentication processor selection method realized by a radio communication system having a subscriber authentication server provided with a plurality of authentication processors and first and second authentication verification apparatuses that carry out authentication requests for first and second authentications, respectively, for the same subscriber to the subscriber authentication server; the method including:
a first notification step wherein, when the subscriber authentication server, upon successful first authentication, reports the identification information of the authentication processor that carried out the first authentication to the first authentication verification apparatus; and
a second notification step wherein the first authentication verification apparatus reports the identification information that was reported from the subscriber authentication server to the second authentication verification apparatus.

According to the present invention, identification information of the authentication processor that carried out the first authentication is reported from the subscriber authentication server to the second authentication verification apparatus by way of the first authentication verification apparatus.

The second authentication verification apparatus is therefore able to select the authentication processor that carried out the first authentication to carry out the authentication request for the second authentication, whereby the authentication processor that is selected in the first authentication can be caused to match the authentication processor that is selected in the second authentication.

As a result, the need for distribution management of temporary subscriber connection management information and internal inquiries is eliminated in the subscriber authentication server, whereby the effects are obtained of shortening the processing time of the authentication process and economizing resources in the subscriber authentication server.

### Brief Description of the Drawings

FIG. 1 shows an example of the configuration of a radio communication system;
FIG. 2 shows an example of the configuration of a subscriber authentication server;
FIG. 3 is a flow chart for explaining the operations when carrying out a connection process to a service network in a related radio communication system;
FIG. 4 is a view for explaining the operations when carrying out a connection process to a service network in a related subscriber authentication server;
FIG. 5 is a flow chart for explaining the operations when carrying out a connection process to a service network in the radio communication system of the first exemplary embodiment of the present invention;
FIG. 6 is a flow chart showing in greater specificity the connection process to a service network shown in FIG. 5;
FIG. 7 shows another example of the configuration of a radio communication system; and
FIG. 8 is a flow chart for explaining operations when carrying out the process of the transfer of context in the radio communication system of the second exemplary embodiment of the present invention.

### Best Mode for Carrying Out the Invention

Best modes for carrying out the present invention are next described with reference to the accompanying figures.

### First Exemplary Embodiment

Although the configuration of the radio communication system of the present exemplary embodiment is similar to FIG. 1, some capabilities are added to subscriber authentication server 50, ASN-GW/FA 30, and HA 40.

More specifically, a function is added to subscriber authentication server 50 as the function of each authentication processor 51 for reporting to ASN-GW/FA 30 an authentication processor individual ID, which is the identification information of the authentication processor that is carrying out network connection authentication. The configuration of each authentication processor 51 is the same as in FIG. 2, and there is no need for providing connection state distribution management unit 515 as in FIG. 4.

A function is added to ASN-GW/FA 30 for reporting to HA 40 the authentication processor individual ID that was reported from subscriber authentication server 50.

In addition, a function is added to HA 40 for selecting authentication processor 51 based on the authentication processor individual ID that was reported from ASN-GW/FA 30 when the authentication request for mobility authentication to subscriber authentication server 50 is carried out.

ASN-GW/FA 30 constitutes the first authentication verification apparatus that carries out an authentication request for network connection authentication as the first authentication. In addition, HA 40 constitutes the second authentication verification apparatus that carries out an authentication request for mobility authentication as the second authentication.

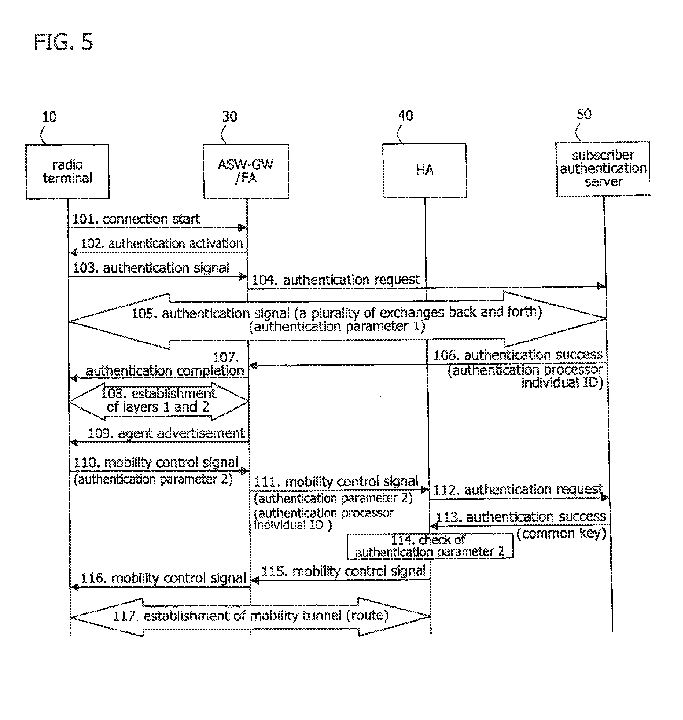

The operations when carrying out a connection process to a service network that was proposed in WiMAX Forum NWG Stage 2 in the radio communication system of the present exemplary embodiment are next described with reference to FIG. 5.

As shown in FIG. 5, processing of Steps 101-105 is carried out similar to that in Steps 701-705 of FIG. 3.

Upon successful authentication of the subscriber of radio terminal 10, subscriber authentication server 50 next, as notification of the authentication success to ASN-GW/FA 30, reports extension attributes that indicate the authentication processor individual ID of authentication processor 51 that carried out the network connection authentication in Step 106. This authentication processor individual ID is temporarily held in ASN-GW/FA 30.

The processing of Steps 107-110, which are similar to that of Steps 707-710 of FIG. 3, is next carried out.

In Step 111, ASN-GW/FA 30 adds onto mobility control signal that was reported from radio terminal 10 an extension field that indicates the authentication process individual ID that was temporarily held, and reports this mobility control signal to HA 40.

In Step 112, HA 40 next selects authentication processor 51 based on the authentication process individual ID that was reported from ASN-GW/FA 30 and submits an authentication request for mobility authentication to subscriber authentication server 50.

The processing of Steps 113-117 that are similar to those of Steps 713-717 of FIG. 3 is next carried out.

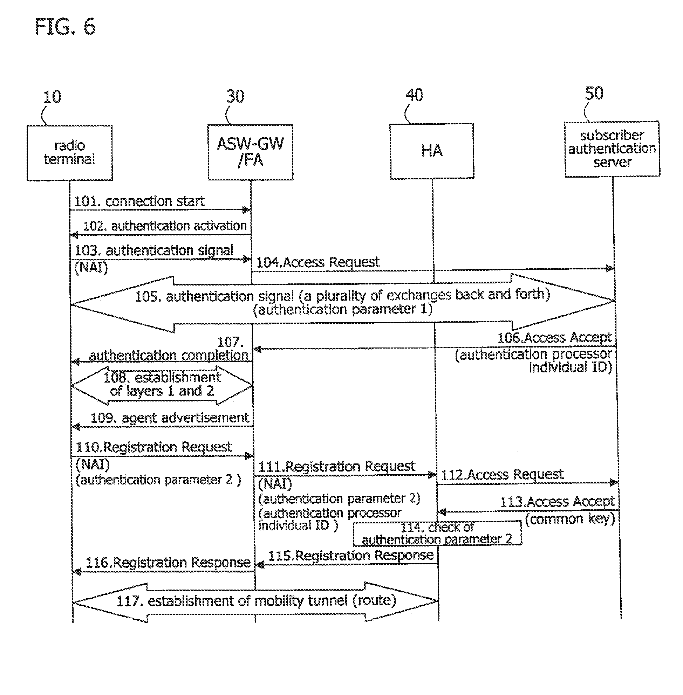

The connection process to the service network shown in FIG. 5 is next described more specifically with reference to FIG. 6. Explanation focuses on processes that are characteristic of the present invention.

As shown in FIG. 6, the processing of Steps 101-103 is first carried out.

In Step 104, ASN-GW/FA 30 next selects authentication processor 51 by executing a DNS search of the Realm portion (for example, sample.com) of the NAI in the authentication signal that was reported from radio terminal 10 and reports to subscriber authentication server 50 an Access Request message, which is an authentication request signal.

The process of Step 105 is next carried out.

Upon successful authentication, subscriber authentication server 50 next, in Step 106, adds the attribute of the authentication processor individual ID in addition to the attributes prescribed by WiMAX Forum NWG-Stage 3 to an Access Accept message, which is the authentication success signal, and reports the Access Accept message to ASN-GW/FA 30. This authentication processor individual ID is held temporarily in ASN-GW/FA 30 as one element of the management information (context) of radio terminal 10.

The processing of Steps 107-109 is next carried out.

Radio terminal 10 reports a Registration Request message, which is a mobility control signal, to ASN-GW/FA 30 in Step 110, and ASN-GW/FA 30 adds the authentication processor individual ID that is temporarily held in the extension field of the Registration Request message in Step 111 and transfers this Registration Request message to HA 40.

In Step 112, HA 40 next selects authentication processor 51 based on the authentication process individual ID that was reported from ASN-GW/FA 30 and reports the Access Request message, which is an authentication request signal, to subscriber authentication server 50.

The processing of Steps 113-117 is next carried out. In FIG. 6, the authentication success signal of Step 113 is reported as an Access Accept message, and the mobility control signal of Steps 115 and 116 is reported as a Registration Response message.

As described above in the present exemplary embodiment, the authentication processor individual ID of authentication processor 51 that carried out the network connection authentication is reported from subscriber authentication server 50 to HA 40 by way of ASN-GW/FA 30.

HA 40 can therefore select, authentication processor 51 that carried out the network connection authentication to carry out the authentication request for mobility authentication, whereby the authentication processor that is selected by ASN-GW/FA 30 in the network connection authentication can be caused to match the authentication processor that is selected by HA 40 in the mobility authentication.

Eliminating the need for managing the distribution of temporary subscriber connection management information and for making internal inquiries in subscriber authentication server 50 enables the shortening of the processing time of the authentication process and the economizing of resources in the subscriber authentication server.

### Second Exemplary Embodiment

The above-described first exemplary embodiment can cause the authentication processor that is selected by ASN-GW/FA 30 in network connection authentication to match the authentication processor that is selected by HA 40 in mobility authentication.

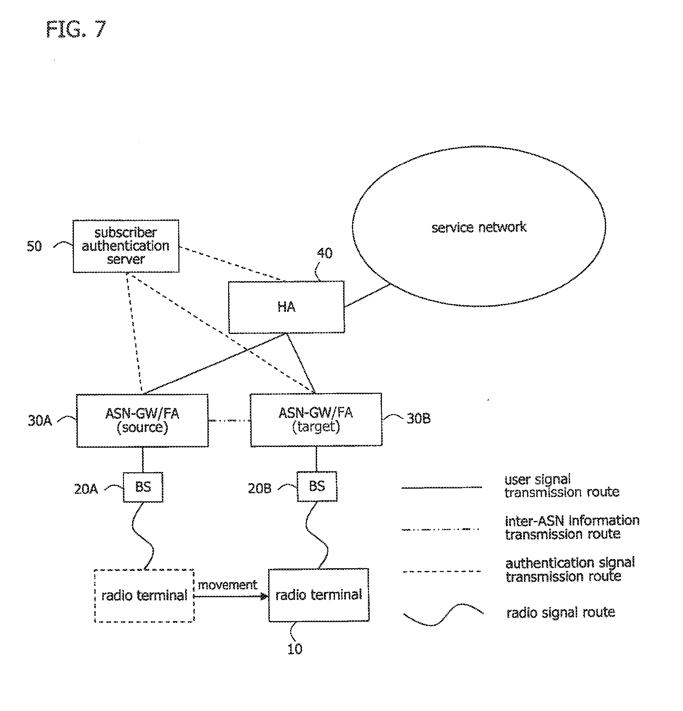

In contrast, the present exemplary embodiment causes the authentication processors that are selected in respective network connection authentications by ASN-GW/FA (source) 30A before switching and ASN-GW/FA (target) 30B following switching to match when ASN-GW/FA 30 is switched with movement of radio terminal 10 as shown in FIG. 7. In FIG. 7, base stations 30 are also switched from base station 30A to base station 30B.

ASN-GW/FA 30A constitutes the first authentication verification apparatus that carries out the authentication request for network connection authentication before switching as the first authentication. ASN-GW/FA 30B constitutes the second authentication verification apparatus that carries out the authentication request for network connection authentication following switching as the second authentication.

WiMAX Forum NWG Stage 3 proposes the transfer of necessary context between ASN-GW/FA 30 that precedes and follows switching at the time of switching of ASN-GW/FA 30.

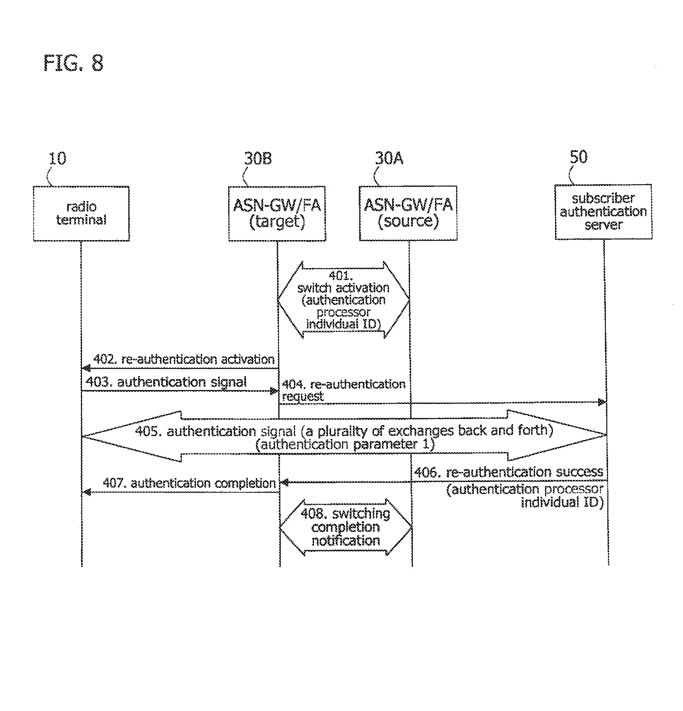

The operations when carrying out the context transfer process that were proposed in WiMAX Forum NWG Stage 3 in the radio communication system of the present exemplary embodiment are next described with reference to FIG. 8.

As shown in FIG. 8, ASN-GW/FA 30A transfers to ASN-GW/FA 30B the context of radio terminal 10 that is the object of movement according to the activation from either ASN-GW/FA 30A or 30B in Step 401. At this time, ASN-GW/FA 30A reports the authentication processor individual ID to ASN-GW/FA 30B by including the authentication processor individual ID that was held in the first network connection authentication in the context. This authentication processor individual ID is temporarily held in ASN-GW/FA 30B.

ASN-GW/FA 30B next reports activation of the re-authentication procedure to radio terminal 10 in Step 402.

Radio terminal 10 then, in accordance with the activation of the re-authentication procedure, reports the authentication signal to ASN-GW/FA 30B in Step 403.

In Step 404, ASN-GW/FA 30B next selects authentication processor 51 based on the authentication process individual ID that is temporarily held to report the re-authentication request to subscriber authentication server 50.

Subscriber authentication server 50 then carries out re-authentication of the subscriber by exchanging authentication parameter 1 with radio terminal 10 in Step 405, and upon successful re-authentication, reports the re-authentication success to ASN-GW/FA 30B in Step 406. At this time, subscriber authentication server 50 also reports the authentication processor individual ID of authentication processor 51 that carried out re-authentication for the subsequent mobility authentication request that was made by HA 40.

ASN-GW/FA 30B then, upon receiving notification of the success of re-authentication, reports authentication completion to radio terminal 10 in Step 407, and further, reports switching completion to ASN-GW/FA 30A in Step 408.

In the present exemplary embodiment as described hereinabove, the authentication processor individual ID of authentication processor 51 that carried out the first network connection authentication is reported from ASN-GW/FA 30 that precedes switching to ASN-GW/FA 30B that follows switching.

ASN-GW/FA 30B can accordingly select authentication processor 51 that carried out the first network connection authentication to carry out a re-authentication request for network connection authentication, whereby the authentication processors that are selected in each of the network connection authentications by ASN-GW/FA 30A and 30B can be caused to match.

Eliminating the need for management of the distribution of temporary subscriber connection management information and for internal inquiries in subscriber authentication server 50 enables a shortening of the processing time of the authentication process and an economization of resources in the subscriber authentication server.

Although the present invention has been described with reference to the above-described exemplary embodiments, the present invention is not limited to the above-described exemplary embodiments. The configuration and details of the present invention are open to various modifications within the scope of the present invention that will be understood by anyone of ordinary skill in the art.

For example, although the authentication processor individual ID was taken as the identification information of authentication processor 51 in the first and second exemplary embodiments, the IP address of outside interface 514 of authentication processor 51 may also be used. In this case, the IP address need not be specified by a DNS search based on the Realm portion of the NAI in the authentication verification apparatus that carries out the latter authentication request (HA 40 in the first exemplary embodiment and ASN-GW/FA 30B in the second exemplary embodiment), whereby the processing time of the authentication process can be further shortened.

The present application claims priority based on Japanese Patent Application No. 2008-109047 for which application was submitted on April 18, 2008 and incorporates all of the disclosures of that application.

## Claims

1. A radio communication system having a subscriber authentication server provided with a plurality of authentication processors and first and second authentication verification apparatuses that carry out authentication requests for first and second authentications, respectively, to said subscriber authentication server for the same subscriber, wherein:
said subscriber authentication server, upon success in said first authentication, reports identification information of the authentication processor that carried out the first authentication to said first authentication verification apparatus; and
said first authentication verification apparatus reports said identification information that was reported from said subscriber authentication server to said second authentication verification apparatus.

2. The radio communication system as set forth in claim 1, wherein:
said first authentication verification apparatus is a gateway apparatus that carries out an authentication request for network connection authentication as said first authentication;
said second authentication verification apparatus is a gateway apparatus that carries out an authentication request for mobility authentication as said second authentication; and
said first authentication verification apparatus loads said identification information in a mobility control signal to report to said second authentication verification apparatus.

3. The radio communication system as set forth in claim 1, wherein:
when gateway apparatuses are switched with movement of a radio terminal, said first authentication verification apparatus is a gateway apparatus before switching and is a gateway apparatus that carries out an authentication request for network connection authentication as said first authentication;
when gateway apparatuses are switched with movement of a radio terminal, said second authentication verification apparatus is a gateway apparatus following switching and is a gateway apparatus that carries out an authentication request for network connection authentication as said second authentication; and
at the time of switching gateway apparatuses, said first authentication verification apparatus reports said identification information to said second authentication verification apparatus.

4. The radio communication system as set forth in any one of claims 1 to 3, wherein said identification information is the IP address of an outside interface of said authentication processors.

5. An authentication processor selection method realized by a radio communication system having a subscriber authentication server provided with a plurality of authentication processors and first and second authentication verification apparatuses that carry out authentication requests for first and second authentications, respectively, to said subscriber authentication server for the same subscriber; said method comprising:
a first notification step wherein, said subscriber authentication server, upon succeeding in said first authentication, reports identification information of the authentication processor that carried out said first authentication to said first authentication verification apparatus; and
a second notification step wherein said first authentication verification apparatus reports said identification information that was reported from said subscriber authentication server to said second authentication verification apparatus.

6. The authentication processor selection method as set forth in claim 5, wherein;
said first authentication verification apparatus is a gateway apparatus that carries out an authentication request for network connection authentication as said first authentication;
said second authentication verification apparatus is a gateway apparatus that carries out an authentication request for mobility authentication as said second authentication; and
in said second notification step, said identification information is loaded on a mobility control signal and reported to said second authentication verification apparatus.

7. The authentication processor selection method as set forth in claim 5, wherein:
when switching of gateway apparatuses is carried out with movement of a radio terminal, said first authentication verification apparatus is a gateway apparatus before switching and is a gateway apparatus that carries out an authentication request for network connection authentication as said first authentication;
when switching of gateway apparatuses is carried out with movement of a radio terminal, said second authentication verification apparatus is a gateway apparatus following switching and is a gateway apparatus that carries out an authentication request for network connection authentication as said second authentication; and
in said second notification step, said identification information is reported to said second authentication verification apparatus at the time of switching gateway apparatuses.

8. The authentication processor selection method as set forth in any one of claims 5 to 7, wherein said identification information is the IP addresses of outside interfaces of said authentication processors.
